# EUROPEAN PATENT APPLICATION

(11) **EP 4 266 102 A1**
(43) Date of publication of application: **25.10.2023**
(21) Application number: 23168674.2
(22) Date of filing: 19.04.2023
(51) Int. Cl.: G02B 6/44

(54) **FIBER TRANSPORTATION TUBE HOLDER**

(30) Priority: 20.04.2022 IN 202211023305
(71) Applicant: Sterlite Technologies Limited, 122102 Haryana (IN)
(72) Inventor: Zuccarello, Sebastiano, 20024 Garbagnate Milanese, Milano (IT); Borrelli, Ottavio, 20024 Garbagnate Milanese, Milano (IT)
(74) Representative: Petraz, Gilberto Luigi

(57) **Abstract**

The present disclosure relates to a transportation tube holder with a base having a back surface and a front surface, a first plurality of arms and a second plurality of arms fixedly attached to the front surface of the base. The transportation tube holder further has a retention channel to hold a transportation tube to allow passage of one or more optical fiber cables formed by virtue of a parallel arrangement of the first plurality of arms with respect to the second plurality of arms. Further, the transportation tube holder has a first locking element and a second locking element protruded from the back surface of the base to operatively engage with upper and lower mating slots of a bracket.

## Description

### TECHNICAL FIELD

Embodiments of the present disclosure relate telecommunications enclosures, and more particularly to telecommunications enclosures including a fiber transportation tube holder.

This application claims the benefit of Indian Application No. 202211023305 titled "FIBER TRANSPORTATION TUBE HOLDER" filed by the applicant on April 20, 2022, which is incorporated herein by reference in its entirety.

### BACKGROUND ART

Telecommunications system typically employ a network of telecommunications cables capable of transmitting large volumes of data and voice signals over relatively long distances. Telecommunications cables can include fiber optic cables, electrical cables, or combinations of electrical and fiber optic cables. A typical telecommunications network also includes a plurality of telecommunications enclosures integrated throughout the network of telecommunications cables. The telecommunications enclosures or "closures" are adapted to house an protect telecommunications components such as splices, termination panels, power splitters, and wave division multiplexors.

While using the optical fiber cables to enable communication, there remains a requirement to manage bundles of the optical fiber cables. The bundles of the optical fiber cables are usually passed through the transportation tubes such that the transportation tubes are harnessed in an optical distribution frame or in a transportation tube holder frame.

Harness frames for harnessing the optical fiber cables and their transportation tubes are well known in prior art. US patent application US5835660 discloses a fiber clamping device having a pair of lugs to be inserted into recesses for mounting purpose, two halves that are connected by a hinge part. The clamping device of the US patent number 5835660 has a complex structure.

Other references incorporated herein are US patent numbers 6905354 and 6738556 that describe U shaped clips that form retention for the transportation cables. These clips are generally mounted on the board or on the frame through the soldering or welding process, for example by using a laser welding process.

The joining of the transportation cables within the harness frame through the welding process, makes the overall operation of disposing or removal of the transportation cables cumbersome. There remains a difficulty to rectify the defect, if any occurs within the harness boxes. Further, welding or soldering forms a permanent joint within the harness frame and therefore it is not easy to remove the welds again and again to rectify the defects over a certain period of time. Since, there is a network of cables housed within the harness frames, therefore the arrangement of the optical fiber cables should be well defined within the frame to avoid any energy losses. The fitment of the clips by welding or soldering within the harness frame eliminates flexibility of the optical cables and thereby the cables remain stuck inside the frame. This adds to difficulty in regular check-ups of the cables housed inside the frame.

In light of the above-stated discussion, there is a need to overcome the above stated disadvantages. Thus, the present disclosure provides a transportation tube holder which overcomes the shortcomings of conventional optical fiber holding/harness frames or clips.

### SUMMARY OF THE DISCLOSURE

Embodiments of the present disclosure provide a transportation tube holder comprising a base having a back surface and a front surface, a first plurality of arms and a second plurality of arms fixedly attached to the front surface of the base, a retention channel formed by virtue of a parallel arrangement of the first plurality of arms with respect to the second plurality of arms, a first locking element and a second locking element protruded from the back surface of the base, wherein the first and second locking elements are configured to be operatively engaged with upper and lower mating slots of a bracket. In particular, the retention channel is configured to hold a transportation tube to allow passage of one or more optical fiber cables.

According to the first aspect of the present disclosure, the first plurality of arms and the second plurality of arms parallelly arranged with respect to one another forms a near-end region that is fixed to the base, a mid-region comprising the retention channel that is capable of holding the transportation tube, and a far-end region that is adapted to allow entry and/or exit of the transportation tube to and/or from the mid-region.

According to the second aspect of the present disclosure, the mid-region has a first max width W1 and the far-end region has a second max width W2 such that the first max width W1 is greater than the second max width W2.

According to the third aspect of the present disclosure, the far-end region provides an opening to insert the transportation tube in the mid region by applying a vertically downward force with respect to the base such that the transportation tube in a snapped position is substantially enclosed from the other three sides.

According to the fourth aspect of the present disclosure, the retention channel comprises an inner surface such that the inner surface is a frictional surface that facilitates the slide of the transportation tube inside the retention channel.

According to the fifth aspect of the present disclosure, each arm of the first plurality of arms comprises a first face and a second face and each arm of the second plurality of arms comprises a first face and a second face such that the first faces of the first plurality of arms faces the first faces of the second plurality of arms to define the retention channel.

According to the sixth aspect of the present disclosure, the first plurality of arms and the second plurality of arms are flexible such that when the transportation tube is inserted from the far-end region, the first plurality of arms and the second plurality of arms extends in an outward direction to accept the transportation tube and retract back when the transportation tube is received in the retention channel.

According to the seventh aspect of the present disclosure, the transportation tube holder is made up of an injection molding material selected from one of, Polycarbonate (PC), Acrylonitrile butadiene styrene (ABS), Polypropylene (PP), Nylon Plastic (PA), a Glass-filled polymer material, or a combination thereof.

According to the eighth aspect of the present disclosure, an apparatus for holding a plurality of transportation tubes in a fiber enclosure comprising a transportation tube holder to hold a transportation tube of the plurality of transportation tubes comprising a base having a back surface and a front surface, a first plurality of arms and a second plurality of arms fixedly attached to the front surface of the base, retention channel formed by virtue of a parallel arrangement of the first plurality of arms with respect to the second plurality of arms, a first locking element and a second locking element protruded from the back surface of the base, wherein the first and second locking elements are configured to be operatively engaged with upper and lower slots of a bracket and a bracket adapted to be fixed on the fiber enclosure, the bracket comprising upper and lower mating slots adapted to receive the first locking element and the second locking element, respectively to fixedly attach the transportation tube holder to the bracket and a plurality of fastening elements configured to engage the bracket to a back panel of the fiber enclosure.

According to the ninth aspect of the present disclosure, the first plurality of arms is arranged in a parallel arrangement with respect to the second plurality of arms such that the first plurality of arms and the second plurality of arms forms the retention channel that is configured to hold the transportation tube to allow passage of one or more optical fiber cables.

According to the tenth aspect of the present disclosure, the first plurality of arms and the second plurality of arms are flexible such that when the transportation tube is inserted from the far-end region. In particular, the first plurality of arms and the second plurality of arms extends in an outward direction to accept the transportation tube and retract back when the transportation tube is received in the retention channel.

In accordance with an embodiment of the present disclosure, the transportation tube holder is made of an injection moulding material selected from one of, Polycarbonate (PC), Acrylonitrile butadiene styrene (ABS), Polypropylene (PP), Nylon Plastic (PA), a Glass-filled polymer material, or a combination thereof.

In accordance with an embodiment of the present disclosure, the retention channel comprises an inner surface such that the inner surface is a frictional surface that facilitates the slide of the transportation tube inside the retention channel.

In accordance with an embodiment of the present disclosure, the bracket is configured to hold one or more transportation tube holders.

These and other aspects herein will be better appreciated and understood when considered in conjunction with the following description and the accompanying drawings. It should be understood, however, that the following descriptions are given by way of illustration and not of limitation. Many changes and modifications may be made within the scope of the disclosure herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating a side perspective view of a transportation tube holder in accordance with an embodiment of the present disclosure;
Fig. 1B is a pictorial snapshot illustrating a side view of a transportation tube holder in accordance with an embodiment of the present disclosure;
Fig. 1C is a pictorial snapshot illustrating another side perspective view of a transportation tube holder in accordance with an embodiment of the present disclosure;
Fig. 1D is a pictorial snapshot illustrating top perspective view of a transportation tube holder in accordance with an embodiment of the present disclosure;
Fig. 1E is a pictorial snapshot illustrating dimensions of the transportation tube holder in accordance with an embodiment of the present disclosure;
Fig. 1F is a pictorial snapshot illustrating dimensions of the transportation tube holder in accordance with an embodiment of the present disclosure;
Fig. 2A is a pictorial snapshot illustrating left side perspective view of an apparatus to hold a plurality of transportation tubes in a fiber enclosure in accordance with an embodiment of the present disclosure;
Fig. 2B is a pictorial snapshot illustrating a right-side perspective view of the apparatus in accordance with an embodiment of the present disclosure;
Fig. 2C is a pictorial snapshot illustrating a front view of the apparatus in accordance with an embodiment of the present disclosure;
Fig. 2D is a pictorial snapshot illustrating a side perspective view of a bracket of the apparatus in accordance with an embodiment of the present disclosure.

The transportation tube holders are illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

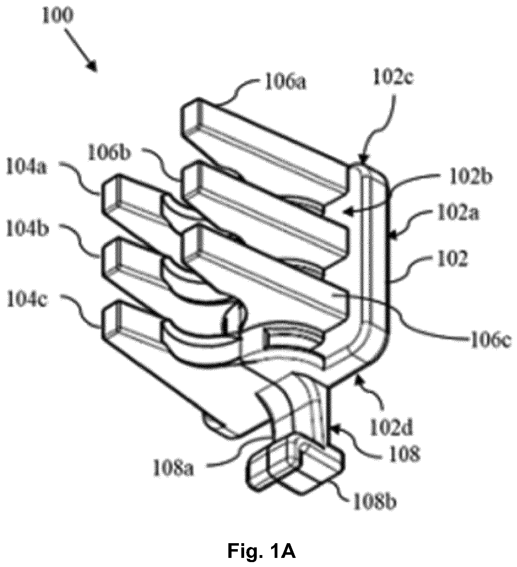

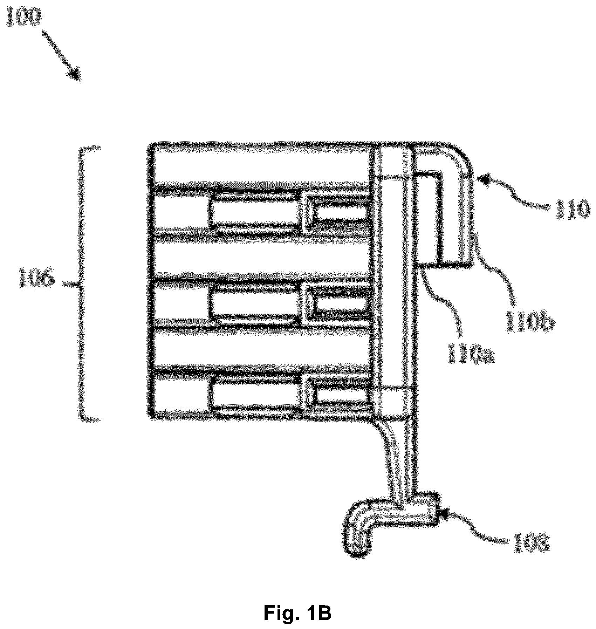

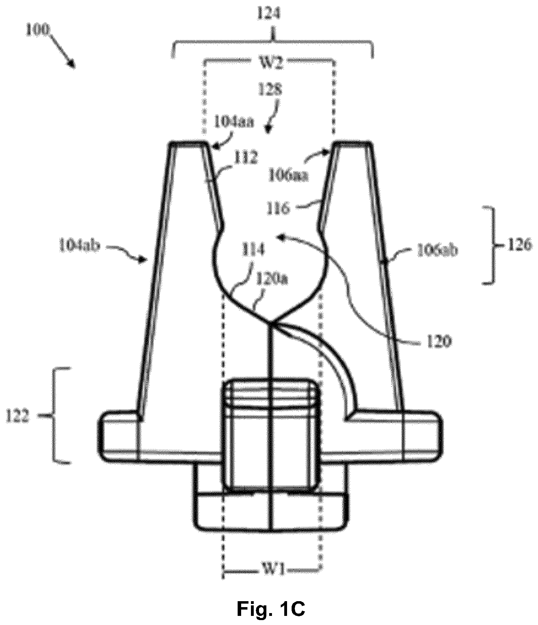

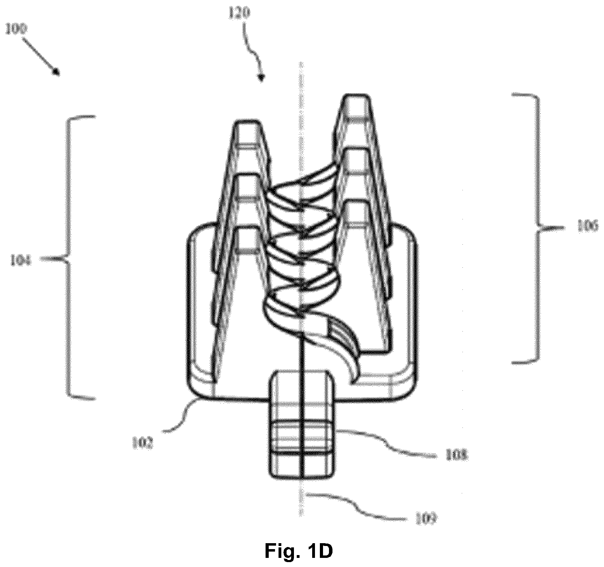

FIG. 1A-1D are pictorial snapshots illustrating different perspective views of a transportation tube holder 100. In particular, the transportation tube holder 100 is adapted to receive a transportation tube carrying one or more optical fibers. Moreover, the transportation tube holder 100 may be snap fitted on a bracket that may be further mounted on a back panel of a fiber enclosure by way of one or more fastening elements to facilitate an easy installation and removal of the transportation tube inside the fiber enclosure.

In accordance with an embodiment of the present disclosure, the transportation tube holder 100 may have a base 102, a first plurality of arms 104, a second plurality of arms 106, a first locking element 108, and a second locking element 110. In particular, the base 102 may be a rigid structure that may be fabricated to provide support to the first plurality of arms 104, the second plurality of arms 106, the first locking element 108, and the second locking element 110.

In some aspects of the present disclosure, the base 102, the first plurality of arms 104, the second plurality of arms 106, the first locking element 108, and the second locking element 110 may be fabricated as a single piece to form the transportation tube holder 100 by way of a molding process. Examples of molding process may include, but are not limited to, compression molding, a melt molding, a transfer molding, and the like. Preferably, the transportation tube holder 100 may be fabricated by way of an injection molding process. Aspects of the present disclosure are intended to include and/or otherwise cover any type of the molding process to fabricate the transportation tube holder 100, including known, related, and later developed molding processes.

In accordance with an embodiment of the present disclosure, the transportation tube holder 100 may be fabricated using a molding material such as, but not limited to, Polycarbonate (PC), Acrylonitrile butadiene styrene (ABS), Polypropylene (PP), Nylon Plastic (PA), a Glass-filled polymer material, and the like. Aspects of the present disclosure are intended to include and/or otherwise cover any type of the molding material for the transportation tube holder 100.

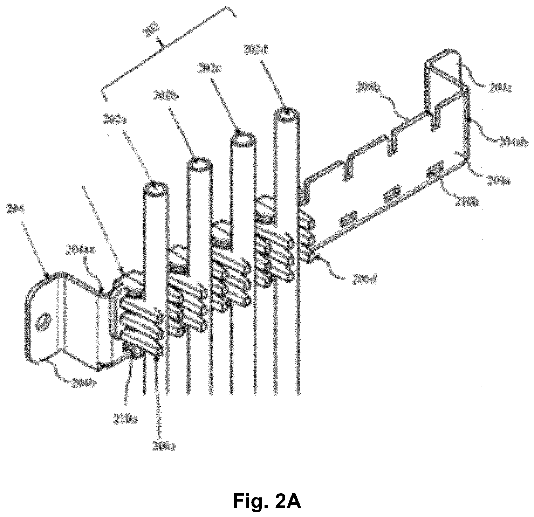

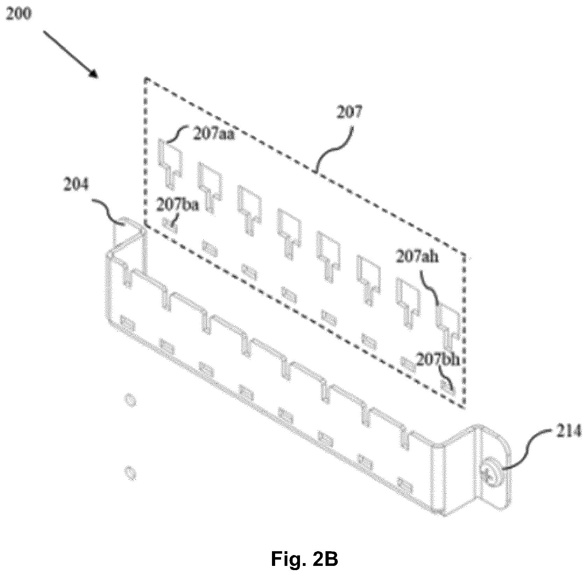

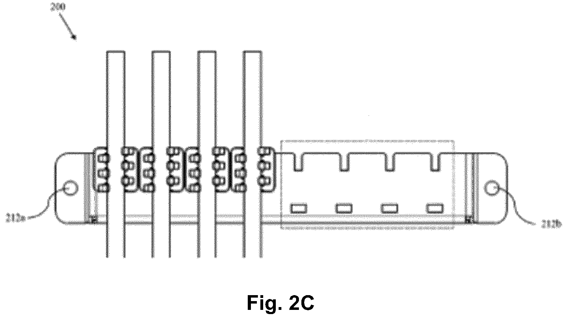

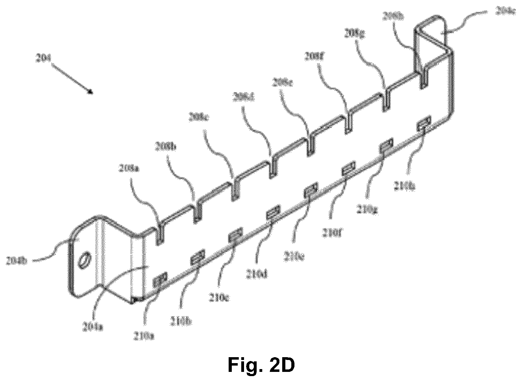

Further, the base 102 may have a bottom surface 102a, a top surface 102b, a first end 102c, and a second end 102d. The bottom surface 102a may be a substantially flat surface that may be adapted to align with a surface of a bracket 204 (shown later in FIG. 2). Particularly, the bottom surface 102a may be adapted to support the first and second locking elements 108 and 110. The top surface 102b may be a substantially flat surface that may be adapted to support the first plurality of arms 104 and the second plurality of arms 106.

In accordance with an embodiment of the present disclosure, the first plurality of arms 104 may have first through third arms 104a-104c. In particular, the first through third arms 1 04a-1 04c of the first plurality of first arms 104 may be L-shaped arms that may protrude in a vertically upward direction from the top surface 102b of the base 102. Moreover, the first arm 104a of the first plurality of arms 104 may be disposed near the first end 102c of the base 102. Further, the second arm 104b of the first plurality of arms 104 may be disposed adjacent to the first arm 104a of the first plurality of arms 106 and the third arm 104c of the first plurality of arms 104 may be disposed near the second end 102d of the base 102 and adjacent to the second arm 104b of the first plurality of arms 106.

Although Fig. 1A-1D illustrate that the first plurality of arms 104 have three arms (i.e., the first through third arms 104a-104c), it will be apparent to a person skilled in the art that the scope of the present disclosure is not limited to it. In various other aspects, the first plurality of first arms 104 may have any number of arms without deviating from the scope of the present disclosure. In such a scenario, each arm of the first plurality of arms 104 is adapted to perform one or more functionalities in a manner similar to the functionalities of the first through third arms 104a-104c as described herein.

In accordance with an embodiment of the present disclosure, the second plurality of arms 106 may have first through third arms 106a-106c. In particular, the first through third arms 106a-106c of the second plurality of second arms 106 may be L-shaped arms that may protrude in a vertically upward direction from the top surface 102b of the base 102. Moreover, the first arm 106a of the second plurality of arms 106 may be disposed near the first end 102c of the base 102. Further, the second arm 106b of the second plurality of arms 106 may be disposed adjacent to the first arm 106a of the second plurality of arms 106 and the third arm 106c of the second plurality of arms 106 may be disposed near the second end 102d of the base 102 and adjacent to the second arm 106b of the second plurality of arms 106.

Thus, the second plurality of arms 106 *(i.e.,* the first through third arms 106a-106c) may be disposed directly opposite to the plurality of first arms 104 *(i.e.,* the first through third arms 104a-104c) such that the first arm 104a of the plurality of first arms 104 faces the first arm 106a of the plurality of second arms 106, the second arm 104b of the plurality of first arms 104 faces the second arm 106b of the plurality of second arms 106, and the third arm 104c of the plurality of first arms 104 faces the third arm 106c of the plurality of third arms 106.

In accordance with an embodiment of the present disclosure, the first plurality of arms 104 and the second plurality of arms 106 may be arranged in a substantially parallel arrangement. Although FIGs. 1A-1D illustrates that the second plurality of arms 106 have three arms *(i.e.,* the first through third arms 106a-106c), it will be apparent to a person skilled in the art that the scope of the present disclosure is not limited to it. In various other aspects, the second plurality of arms 106 may have any number of arms without deviating from the scope of the present disclosure. In such a scenario, each arm of the second plurality of arms 106 is adapted to perform one or more functionalities in a manner similar to the functionalities of the first through third arms 106a-106c as described herein. Specifically, the first plurality of arms 104 and the second plurality of arms 106 may be designed in a way such that to accept and hold a transportation tube 202 (shown later in FIG. 2) having one or more optical fibers (not shown).

In accordance with an embodiment of the present disclosure, the base 102 may have the first end 102c and the second end 102d such that the first locking element 108 protrudes in a substantially outward direction from the first end 102c. Particularly, the first locking element 108 may be an L-shaped protrusion that may be adapted to be engaged with the bracket 204. The first locking element 108 may have a vertical leg 108a and a horizontal leg 108b. Moreover, a proximal end of the vertical leg 108a may be attached to the first end 102c of the base 102 and a distal end of the vertical leg 108a may be attached to the first end of the horizontal leg 108b. As used herein, the term "proximal end" refers to an end of the vertical leg 108a that faces towards the first end 102c of the base 102 and the term "distal end" refers to an end of the vertical leg 108a that faces away first end 102c of the base 102. In other words, the vertical leg 108a and the horizontal leg 108b may be attached to one another thus forming the L-shaped protrusion of the first locking element 108. Further, the horizontal leg 108b may have a C-shaped bent at a second end that is opposite to the first end such that the C-shaped bent of the horizontal leg 108b facilitates to snap fit the transportation tube holder 100 in the bracket 204.

In accordance with an embodiment of the present disclosure, the transportation tube holder 100 may have the base 102, the second plurality of arms 106, and the first locking element 108 as discussed above. Further, the transportation tube holder 100 may have the second locking element 110 with a connector 110a and a L-shaped element 110b. Specifically, the connector 110a may be fabricated to attach the L-shaped element 110b to the bottom surface 102a of the base 102. In some aspects of the present disclosure, the connector 110a may have a width that may be smaller than a width of the L-shaped element 110b such that the connector 110a is adapted to be inserted in a upper mating slot of a plurality of upper mating slots 208 (as shown later in FIG. 2) of the bracket 204 to snap fit the transportation tube holder 100 to the bracket 204.

In accordance with an embodiment of the present disclosure, the first arm 104a of the first plurality of arms 104 may be disposed opposite to the first arm 106a of the second plurality of arms 106. The first arm 104a of the first plurality of arms 104 may have a first face 104aa and a second face 104ab and the first arm 106a of the plurality of second arms 106 have a first face 106aa and a second face 106ab. As illustrated, the first arm 104a of the first plurality of arms 104 is disposed opposite to the first arm 106a of the second plurality of arms 106 such that the first face 104aa of the first arm 104a faces the first face 106aa of the first arm 106a. It will be apparent to a person skilled in the art that the transportation tube holder 100 is shown to have the first arm 104a of the first plurality of arms 104 to have the first face 104aa and the second face 104ab and the first arm 106a of the second plurality of arms 106 to have the first face 106aa and the second face 106ab to make the illustrations concise and clear and should not be considered as a limitation of the present disclosure. In various other embodiments, each arm of the first plurality of arms 104 and the second plurality of arms 106 may have corresponding first and second faces such that the first faces of the first plurality of arms 104 faces the corresponding first faces of the second plurality of arms 106, without deviating from the scope of the present disclosure. In some aspects of the present disclosure, the second faces 104ab and 106ab of the first arm 104a and the first arm 106a, respectively, may be slanted to a first predefined angle with respect to the top surface 102b of the base 102.

In accordance with an embodiment of the present disclosure, the first face 104aa of the first arm 104a may have a flat region 112 and a S-shaped region 114. Particularly, the first face 106aa of the first arm 106a of the plurality of first arms 106 may have a flat region 116 and a S-shaped region 118. Moreover, the flat region 112 of the first face 104aa of the first arm 104a may be slanted to a second predefined angle with respect to the top surface 102b of the base 102. Similarly, the flat region 116 of the first face 106aa of the first arm 106a may be slanted to the second predefined angle with respect to the top surface 102b of the base 102. Further, the flat regions 112 and 116 slanted to the second predefined angle may facilitate to easily insert the transportation tube 202 in the transportation tube holder 100 by application of a vertically downward force (i.e., by pushing the transportation tube 202). Furthermore, the S-shaped region 114 and the S-shaped region 118 of the first arm 104a and second arm 106a, respectively, may form a retention channel 120.

In accordance with an embodiment of the present disclosure, the retention channel 120 may be adapted to partially surround the transportation tube 202 such that the transportation tube 202 can be easily installed and/or removed by way of a push and/or pull method. In some aspects of the present disclosure, the retention channel 120 may be a frictionless channel that allows the transportation tube 202 to slide inside the retention channel 120. Specifically, an inner surface 120a of the retention channel 120 may be a frictionless surface that facilitates the slide of the transportation tube 202 inside the retention channel 120.

As illustrated, the transportation tube holder 100 may define a near-end region 122, a far-end region 124, and a mid-region 126. Particularly, the near-end region 122 may be a region of the transportation tube holder 100 that may be proximate to the bracket 204 when the transportation tube holder 100 is installed on the bracket 204. Further, the far-end region 124 may be a region of the transportation tube holder 100 that may be opposite to the near-end region 122 and facing away from the bracket 204 when the transportation tube holder 100 is installed on the bracket 204. The mid-region 126 may be a region of the transportation tube holder 100 that is between the near-end region 122 and the far-end region 124 and may be adapted to hold the transportation tube 202 when the transportation tube 202 is pushed into the transportation tube holder 100 from the far-end region 124.

In accordance with an embodiment of the present disclosure, the far-end region 124 of the transportation tube holder 100 may have an opening 128. Specifically, the first arm 104a of the first plurality of arms 104 and the first arm 106a of the second plurality of arms 106 may define the opening 128 that may facilitate to entry and/or exit of the transportation tube 202 to and/or from the mid-region 126 of the transportation tube holder 100 (i.e., the retention channel 120) such that the transportation tube 202 is surrounded from three sides and can be accessed from a fourth side *(i.e.,* through the far-end region 122). Moreover, the opening 128 facilitate to insert the transportation tube 202 in the mid region 126 by applying the vertically downward force with respect to the base 102 such that the transportation tube 202 in a snapped position is substantially enclosed from other three sides and can be accessed from a fourth side *(i.e.,* through the far-end region 122).

In some aspects of the present disclosure, the mid-region 126 may have a first max width W1 and the far-end region 122 may have a second max width W2. As illustrated, the first max width W1 may be greater than the second max width W2. Further, the first max width W1 may be in a range of 6 millimeters (mm) to 7 mm and the second max width W2 may be in a range of 7 mm to 8 mm.

In accordance with an embodiment of the present disclosure, the transportation tube holder 100 may have the first plurality of arms 104 and the second plurality of arms 106 arranged in the parallel arrangement such that by virtue of the parallel arrangement of the first plurality of arms 104 and the second plurality of arms 106, the retention channel 120 is formed. In some aspects of the present disclosure, the base 102, the first plurality of arms 104, the second plurality of arms 106, the first locking element 108, and the second locking element 110 may be fabricated by way of a single direction mold.

The fabrication of the transportation tube holder 100 *(i.e.,* the base 102, the first plurality of arms 104, the second plurality of arms 106, the first locking element 108, and the second locking element 110) by way of a single direction mold may facilitate to reduce a manufacturing cost of the transportation tube holder 100. As illustrated, the transportation tube holder 100 may be fabricated by way of a mold (not shown) that may be closed in a center along a single axis *(i.e.,* a mold closure line 109). In other words, such a mold has two parts that may be closed the center along the mold closure line 109 whole fabricating the transportation tube holder 100. Specifically, such molds are simple in operation, economical, and fast that in turn reduces a fabrication complexity and cost of the transportation tube holder 100.

In accordance with an embodiment of the present disclosure, the base 102 may have a width W3 in a range of 10 mm to 20 mm. Preferably, the width W3 may be 18 mm. Further, the transportation tube holder 100 may have a total length TL in a range of 26 mm to 30 m. Preferably, the total length TL may be 27 mm. As illustrated, the total length TL may have a first length L1 of the base 102 and a second length L2 of the first locking element 106. The total length TL of the transportation tube holder 100 may be a summation of the first length L1 and the second length L2. Specifically, the first length L1 of the base 102 may be 18 mm and the second length L2 of the first locking element 106 may be in a range of 8 mm to 12 mm such that the total length TL of the transportation tube holder 100 may be in the range of 26 mm to 30.

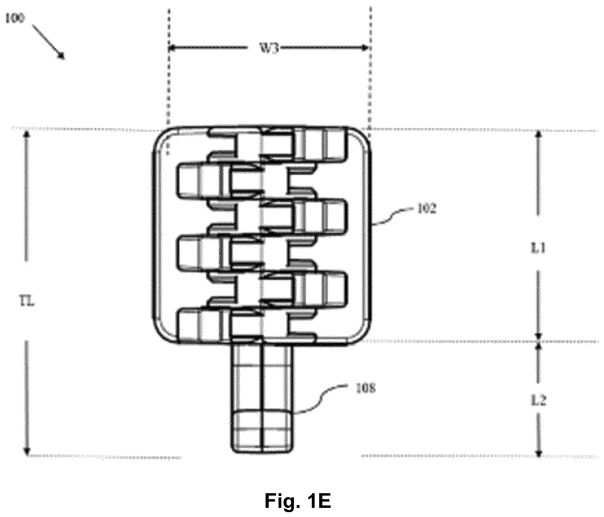

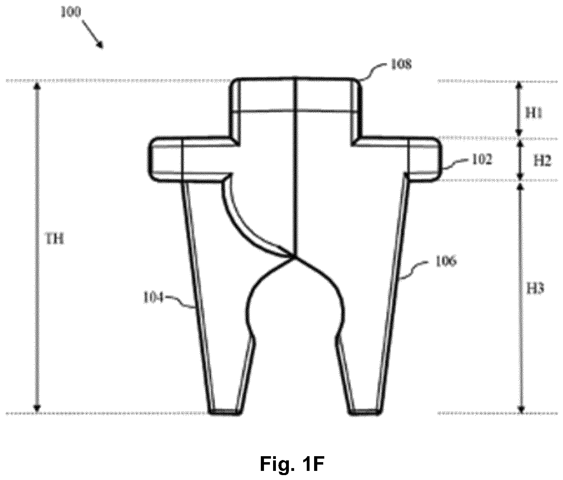

In accordance with an embodiment of the present disclosure, transportation tube holder 100 may have a total height TH that may have a first height H1 of the first and second locking elements 106 and 108, a second height H2 of the base 102, and a third height H3 of the first plurality of arms 104 and the second plurality of arms 106. Particularly, the total height TH may be in a range of 14 mm to 29 mm. The total height TH may be equal to 21 mm. The first height H1 of the first and second locking elements 106 and 108 may be in a range of 3 mm to 5mm. Preferably, the first height H1 of the first and second locking elements 106 and 108 may be equal to 3.8 mm. Further, the second height H2 of the base 102 may be in a range of 1 mm to 4 mm. Preferably, the second height H2 of the base 102 may be equal to 2.6 mm. Further, the third height H3 of the first plurality of arms 104 and the second plurality of arms 106 may be in a range of 10 mm to 20 mm. Preferably, the third height H3 of the first plurality of arms 104 and the second plurality of arms 106 may be equal to 14.5 mm. Although FIGs. 1E and 1F illustrate the specific dimensions of the transportation tube holder 100, it will be apparent to a person skilled in the art that the scope of the present disclosure is not limited to it and the dimensions provided herein are for illustrative purposes only. In various other aspects, the dimensions of the transportation tube holder 100 may vary based on a type of material used for fabricating the transportation tube holder 100 and on a requirement of the arrangement, without deviating from the scope of the present disclosure.

Fig. 2A-2C are pictorial snapshots illustrating different views of an apparatus 200 to hold a plurality of transportation tubes 202 in a fiber enclosure. Specifically, the apparatus 200 to hold the plurality of transportation tubes 202 in the fiber enclosure. The plurality of transportation tubes 202 may have first through fourth transportation tubes 202a-202d. Specifically, the first through fourth transportation tubes 202a-202d may be adapted to hold one or more optical fibers therein. The apparatus 200 may have the bracket 204 and a plurality of tube holders 206. Further, the plurality of tube holders 206 may have first through fourth tube holders 206a-206d. The first through fourth tube holders 206a-206d are structurally and functionally similar to the transportation tube holder 100.

In accordance with an embodiment of the present disclosure, the bracket 204 may have a panel 204a, a first L-shaped element 204b, and a second L-shaped element 204c. In particular, the panel 204a may have a shape such as, but not limited to, a rectangular shape, a square shape, and the like. Aspects of the present disclosure are intended to include and/or otherwise cover any type of the shape of the panel 204a. Moreover, the panel 204a may have a first end 204aa and a second end 204ab such that the first L-shaped element 204b may be attached to the first end 204aa of the panel 204a and the second L-shaped element 204c may be attached to the second end 204ab of the panel 204a. Further, the panel 204a may have a plurality upper mating slot 208 and a plurality lower mating slot 210.

Specifically, the plurality of upper mating slots 208 may have first through eighth upper mating slots 208a-208h. Similarly, the plurality of lower mating slots 208 may have first through eighth lower mating slots 210a-210h. As illustrated, the first through eighth upper mating slots 208a-208h may be vertically rectangular cut sections provided at one edge of the panel 204a and the first through eighth lower mating slots 210a-210h may be horizontally rectangular through holes provided near a second edge that is opposite to the first edge of the panel 204a. In some aspects of the present disclosure, a number of the plurality of upper and lower mating slots 208 and 210 may be the same.

Although FIG. 2 illustrates that the plurality of upper and lower mating slots 208 and 210 have eight mating slots each (i.e., first through eighth upper mating slots 208a-208h and the first through eighth lower mating slots 210a-210h), it will be apparent to a person skilled in the art that the scope of the present disclosure is not limited to it.

In various other aspects, the plurality of upper and lower mating slots 208 and 210 may have any number of upper and lower mating slots that may depend on a number of tube holders to be installed on the bracket 204 without deviating from the scope of the present disclosure. In such a scenario, each of the upper and lower mating slots is configured to perform one or more operations in a manner similar to the operations of the first through eighth upper mating slots 208a-208h and first through eighth lower mating slots 210a-210h as described herein.

In accordance with an embodiment of the present disclosure, the first through eighth upper mating slots 208a-208h and the first through eighth lower grooves 210a-210h may be adapted to engage first and second locking elements 108 and 110 of the first through fourth tube holders 206a-206d. In operation, the second locking element 110 of the transportation tube holder 206a may be inserted in the first upper mating slot 208a of the panel 202. Further, the transportation tube holder 206a may be pushed in a vertically downward direction such that the second locking element 110 of the transportation tube holder 206a is fixedly engaged with the first upper mating slot 208a.

Particularly, the first locking element 108 of the transportation tube holder 206a may be inserted in the first lower mating slot 210a of the panel 202. Further, the transportation tube holder 206a may be pushed towards the panel 204a such that the first locking element 108 is inserted into the first lower mating slot 210a to fixedly install the transportation tube holder 206a on the bracket 204. Furthermore, the transportation tube 202a may be pushed through the first and second plurality of arms 104 and 106 of the transportation tube holder 206a such that the first and second plurality of arms 104 and 106 are flexible such that the first and second plurality of arms 104 and 106 extends in an outward direction to facilitate insertion of the transportation tube 202a in the retention channel 120 of the transportation tube holder 206a.

In accordance with an embodiment of the present disclosure, the first and second plurality of arms 104 and 106 may retract back to an original position when the transportation tube 202a is received in the retention channel 120 of the transportation tube holder 206a.

In accordance with an embodiment of the present disclosure, apparatus 200 may have the bracket 204 and the plurality of tube holders 206 with first through eighth tube holders 206a-206h. In particular, the first through eighth tube holders 206a-206h are structurally and functionally similar to the transportation tube holder 100. Moreover, the bracket 204 may have the panel 204a, the first L-shaped element 204b, and the second L-shaped element 204c as discussed in conjunction with FIG. 2A. As illustrated, the first L-shaped element 204a and the second L-shaped element 204b may have a plurality of fastening elements 212. In some aspects of the present disclosure, the plurality of fastening elements 212 may have a first through hole 212a (as shown later in FIG. 2C and 2D) provided in the first L-shaped element 204a and a second through hole 212b (as shown later in FIG. 2C and 2D) provided in the second L-shaped element 204b.

In some aspects of the present disclosure, the first through hole 212a and the second through hole 212b may be provided to fixedly attach the bracket 204 to a back panel 207 of a fiber enclosure (not shown). The bracket 204 may be fixedly attached to the back panel 207 the fiber enclosure by way of a plurality of fasteners of which a fastener 214 is shown. And, the fastener 214 may be made up of a material selected from one of, a hardened plastic, a metal, and the like. Aspects of the present disclosure are intended to include and/or otherwise cover any type of the material for the fastener 214, without deviating from the scope of the present disclosure. Further, the fastener 214 may be, but not limited to, a self-drilling screw, a hex bolt, a carriage bolt, and the like.

Aspects of the present disclosure are intended to include and/or otherwise cover any type of the fastener 214, without deviating from the scope of the present disclosure. In some aspects of the present disclosure, the fiber panel 207 may have a plurality upper mating slot 207a and a plurality lower mating slot 207b. Specifically, the plurality of upper mating slots 207a may have first through eighth upper mating slots 207aa-207ah. Similarly, the plurality of lower mating slots 207b may have first through eighth lower mating slots 207ba-207bh. The first through eighth upper mating slots 207aa-207ah and the first through eighth lower mating slots 207ba-207bh may be structurally and functionally similar to the first through eighth upper mating slots 208a-208h and the first through eighth lower mating slots 210a-210h of the bracket 204. The first through eighth upper mating slots 207aa-207ah and the first through eighth lower mating slots 207ba-207bh may facilitate an attachment of the first through eighth tube holders 206a-206h directly to the back panel 207 by engagement with the first through eighth upper mating slots 207aa-207ah and the first through eighth lower mating slots 207ba-207bh.

FIG. 2C illustrates a front view of the apparatus 200. As illustrated, the first L-shaped element 204a and the second L-shaped element 204b may have the plurality of fastening elements 212. In some aspects of the present disclosure, the plurality of fastening elements 212 may have the first through hole 212a provided in the first L-shaped element 204a and the second through hole 212b provided in the second L-shaped element 204b. The first through hole 212a and the second through hole 212b may be provided to fixedly attach the bracket 204 in the fiber enclosure (not shown) as discussed above in conjunction with FIG. 2B.

In some aspects of the present disclosure, the plurality of fastening elements 212 may have protrusions provided on a back surface of the panel 204a of the bracket 204. The protrusions may facilitate to attach the bracket 204 to the back panel 207 (as shown in FIG. 2B) of the fiber enclosure by way of a snap-fit method and/or retention pins. Moreover, the bracket 204 having the panel 204a, the first and second L-shaped elements 204b and 204c may be fabricated as a single piece using a single direction mold. Further, the bracket 204 may be fabricated as a single piece by way of a molding process such as, but not limited to, compression molding, melt molding, transfer molding, injection molding, and the like. Aspects of the present disclosure are intended to include and/or otherwise cover any type of the molding process to fabricate the transportation tube holder 100, including known, related, and later developed molding processes. In some aspects of the present disclosure, the bracket 204 may be fabricated using a molding material such as, but not limited to, Polycarbonate (PC), Acrylonitrile butadiene styrene (ABS), Polypropylene (PP), Nylon Plastic (PA), a Glass-filled polymer material, and the like. Aspects of the present disclosure are intended to include and/or otherwise cover any type of the molding material for the bracket 204.

In accordance with an embodiment of the present disclosure, the bracket 204 may have the panel 204a, the first L-shaped element 204b, and the second L-shaped element 204c as discussed above. Further, the panel 204a may have the first through eighth upper mating slots 208a-208h and the first through eighth lower mating slots 210a-210h. As illustrated, the first through eighth upper mating slots 208a-208h may be vertically rectangular cut sections provided at one edge of the panel 204a and the first through eighth lower mating slots 210a-210h may be horizontally rectangular through holes provided near a second edge that is opposite to the first edge of the panel 204a.

Thus, the transportation tube holder 100 manufactured by way of the injection molding process in a single direction mold facilitates in reducing the cost of manufacturing. Further, the transportation tube holder 100 can be snap fitted in the bracket 204, thus eliminating the need of additional equipment for installation of the transportation tube holder 100 that further facilitates an easy installation process that makes a user experience more hassle-free during installation and removal of the transportation tube holder 100. Furthermore, the opening 128 at the far-end region 122 facilitate to insert the transportation tube 202 in the mid region 126 by applying the vertically downward force with respect to the base 102 such that the transportation tube 202 in the snapped position is substantially enclosed from other three sides and can be accessed from a fourth side (i.e., through the far-end region 122), thus facilitating easy mounting of the transportation tube 202.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A transportation tube holder **characterized in that**:
a base having a back surface and a front surface;
a first plurality of arms and a second plurality of arms fixedly attached to the front surface of the base,
a retention channel formed by virtue of a parallel arrangement of the first plurality of arms with respect to the second plurality of arms, wherein the retention channel is configured to hold a transportation tube to allow passage of one or more optical fiber cables; and
a first locking element and a second locking element protruded from the back surface of the base, wherein the first and second locking elements are configured to be operatively engaged with upper and lower mating slots of a bracket.

2. The transportation tube holder of claim 1, wherein the first plurality of arms and the second plurality of arms parallelly arranged with respect to one another forms a near-end region that is fixed to the base, a mid-region comprising the retention channel that is capable of holding the transportation tube, and a far-end region that is adapted to allow entry and/or exit of the transportation tube to and/or from the mid-region.

3. The transportation tube holder of claim 2, wherein the mid-region has a first max width W1 and the far-end region has a second max width W2 such that the first max width W1 is greater than the second max width W2.

4. The transportation tube holder of claim 2, wherein the far-end region provides an opening to insert the transportation tube in the mid region by applying a vertically downward force with respect to the base such that the transportation tube in a snapped position is substantially enclosed from other three sides.

5. The transportation tube holder of claim 1, wherein the retention channel comprises an inner surface such that the inner surface is a frictional surface that facilitate to slide the transportation tube inside the retention channel.

6. The optical fiber of claim 1, wherein each arm of the first plurality of arms comprises a first face and a second face and each arm of the second plurality of arms comprises a first face and a second face such that the first faces of the first plurality of arms faces the first faces of the second plurality of arms to define the retention channel.

7. The optical fiber of claim 1, wherein the first plurality of arms and the second plurality of arms are flexible such that when the transportation tube is inserted from the far-end region, the first plurality of arms and the second plurality of arms extends in an outward direction to accept the transportation tube and retract back when the transportation tube is received in the retention channel.

8. The transportation tube holder of claim 1, wherein the transportation tube holder is made up of an injection molding material selected from one of, Polycarbonate (PC), Acrylonitrile butadiene styrene (ABS), Polypropylene (PP), Nylon Plastic (PA), a Glass-filled polymer material, or a combination thereof.

9. An apparatus for holding a plurality of transportation tubes in a fiber enclosure **characterized in that**:
a transportation tube holder to hold a transportation tube of the plurality of transportation tubes, wherein the transportation tube holder comprising:
a base having a back surface and a front surface;
a first plurality of arms and a second plurality of arms fixedly attached to the front surface of the base,
a retention channel formed by virtue of a parallel arrangement of the first plurality of arms with respect to the second plurality of arms, wherein the retention channel is configured to hold a transportation tube to allow passage of one or more optical fiber cables; and
a first locking element and a second locking element protruded from the back surface of the base, wherein the first and second locking elements are configured to be operatively engaged with upper and lower slots of a bracket; and
a bracket adapted to be fixed on the fiber enclosure, the bracket comprising;
upper and lower mating slots adapted to receive the first locking element and the second locking element, respectively to fixedly attach the transportation tube holder to the bracket; and
a plurality of fastening elements configured to engage the bracket to a back panel of the fiber enclosure.

10. The apparatus of claim 9, wherein the first plurality of arms is arranged in a parallel arrangement with respect to the second plurality of arms such that the first plurality of arms and the second plurality of arms forms the retention channel that is configured to hold the transportation tube to allow passage of one or more optical fiber cables.

11. The apparatus of claim 9, wherein the first plurality of arms and the second plurality of arms are flexible such that when the transportation tube is inserted from the far-end region.

12. The apparatus of claim 9, wherein the first plurality of arms and the second plurality of arms extends in an outward direction to accept the transportation tube and retract back when the transportation tube is received in the retention channel.

13. The apparatus of claim 9, wherein the transportation tube holder is made of an injection moulding material selected from one of, Polycarbonate (PC), Acrylonitrile butadiene styrene (ABS), Polypropylene (PP), Nylon Plastic (PA), a Glass-filled polymer material, or a combination thereof.

14. The apparatus of claim 9, wherein the retention channel comprises an inner surface such that the inner surface is a frictional surface that facilitate to slide the transportation tube inside the retention channel.

15. The apparatus of claim 9, wherein the bracket is configured to hold one or more transportation tube holders.
